# EUROPÄISCHE PATENTSCHRIFT

(11) **EP 3 578 930 B1**
(45) Veröffentlichungstag und Bekanntmachung des Hinweises auf die Patenterteilung: **22.03.2023**
(21) Anmeldenummer: 19157977.0
(22) Anmeldetag: 19.02.2019
(51) Int. Cl.: G01F 23/284, G01S 7/288, G01S 7/292, G01S 13/34, G01S 13/88

(54) **VERFAHREN ZUR FÖRDERBANDÜBERWACHUNG**
CONVEYOR BELT MONITORING METHOD
PROCÉDÉ DE SURVEILLANCE DE LA BANDE TRANSPORTEUSE

(30) Priorität: 30.05.2018 EP 18175199
(43) Veröffentlichungstag der Anmeldung: 11.12.2019
(73) Patentinhaber: VEGA Grieshaber KG, 77709 Wolfach (DE)
(72) Erfinder: Wälde, Steffen, 78078 Niedereschach (DE); Skowaisa, Jürgen, 77761 Schiltach (DE)
(74) Vertreter: Patentanwälte Bauer Vorberg Kayser

(56) Entgegenhaltungen:
- EP-A1- 2 803 951
- EP-A1- 2 837 950
- DE-A1-102011 075 826
- DE-A1-102013 200 951

## Beschreibung

Die vorliegende Erfindung betrifft ein Verfahren zur Messung eines Volumenstroms eines durch ein Förderband transportierten Mediums mit einem Radarmessgerät.

Die Überwachung von Förderbändern und deren Volumenstrom findet in modernen Industriebetrieben immer häufiger Anwendung. Dabei können Schüttgüter wie bspw. Kohle, Erz, Kies, Sand, Erde, Hackschnitzel, Zellulose, Düngemittel, Salz und viele weitere Güter transportiert werden. Zur Erfassung dieses Volumenstroms sind verschiedene Techniken bekannt. Oftmals kommen Bandwaagen zum Einsatz, die allerdings neben einer zeitintensiven Installation und der Notwendigkeit einer regelmäßigen Kalibrierung auch noch viele verschiedene Messfehlerquellen aufweisen.

Eine alternative Technik sind Laser-Scanner, die jedoch aufgrund der oftmals rauen Umgebungsbedingungen, die unter anderem Staub, Temperaturschwankungen und Feuchtigkeit umfassen, ebenfalls Probleme aufweisen. Insbesondere Staub kann bei optischen Messsystemen eine Messung sogar unmöglich machen.

Weiterhin sind radiometrische Messprinzipien bekannt, die aufgrund der hohen Anschaffungskosten, einem hohen Transport- und Installationsaufwand und zusätzlich notwendigem Strahlenschutz ebenfalls nicht überall infrage kommen.

Aus der Füllstandmesstechnik sind berührungslos messende Radarverfahren bekannt, die verhältnismäßig kostengünstig in Anschaffung und Wartung sind und auch bei den oben beschrieben rauen Umgebungsbedingungen ohne größere Probleme eingesetzt werden können. Solche Systeme werden in der Füllstandmesstechnik zur Bestimmung von Füllständen, d.h. insbesondere dem Abstand der Oberfläche eines Mediums von dem Messgerät, eingesetzt. Die aus der Füllstandmesstechnik bekannten Radarmessgeräte messen meist über ein Puls-Laufzeit- oder ein FMCW-Verfahren den Abstand zwischen Messgerät und Füllgut.

Bei einem Puls-Laufzeit-Verfahren wird ein Mikrowellenpaket in Richtung eines Ziels, dessen Abstand bestimmt werden soll, ausgesendet und die Zeit gemessen, bis der an der Oberfläche des Ziels reflektierte Impuls wieder vom Messgerät empfangen wird.

Bei einem FMCW-Verfahren (FMCW = Frequency Modulated Continous Wave) zur Abstandsbestimmung wird von dem Radarmessgerät ein frequenzmodulierter Radarimpuls in Richtung des Mediums ausgesandt und von einer Oberfläche des Mediums reflektiert. Die reflektierten Signale werden von dem Radarmessgerät wieder empfangen und mittels einer Spektralanalyse vom Zeit- in den Frequenzbereich überführt. Eine Frequenzdifferenz zwischen dem empfangenen Signal und dem ausgesendeten Signal ist proportional zu einem Abstand des Mediums zu dem Messgerät, sodass dieser Abstand oder ein dazu korrespondierender Füllstand ermittelt werden kann.

Außerdem sind Radarsensoren zur Geschwindigkeitsmessung bekannt. Diese nutzen ein Verfahren unter Ausnutzung des sog. Dopplereffekts, durch den bei reflektierten Radarsignalen eine Frequenzverschiebung, die proportional zu einer Geschwindigkeit des Reflektors ist, auftritt. Durch eine Bestimmung der Frequenzverschiebung kann die Geschwindigkeit des Mediums damit ermittelt werden.

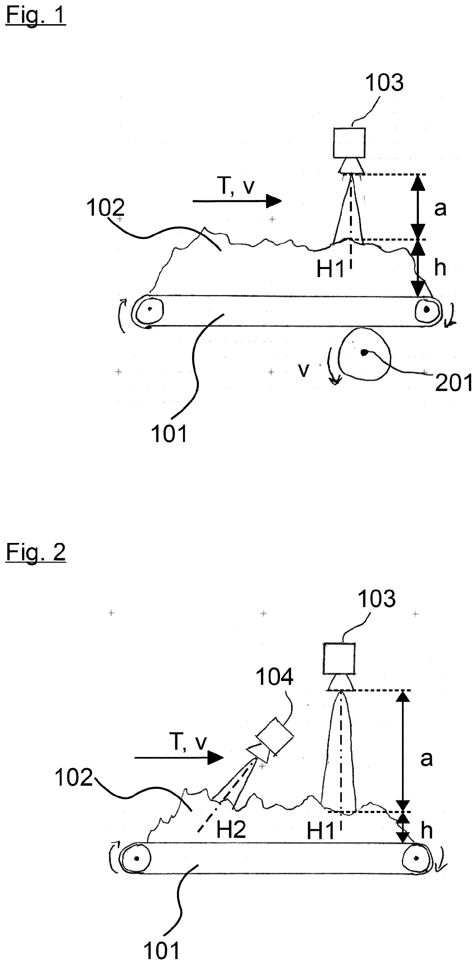

Ein bekanntes Messsystem wie es zur Überwachung von Förderbändern eingesetzt wird, ist in den Figuren 1 und 2 dargestellt.

Figur 1 zeigt ein Förderband 101, auf dem ein Medium 102, typischerweise ein rieselfähiges Schüttgut, mit einer Geschwindigkeit v in eine Transportrichtung T transportiert wird. Solche rieselfähigen Schüttgüter können bspw., wie oben bereits beschrieben, Kohle, Erz, Kies, Sand, Erde, Hackschnitzel, Zellulose, Düngemittel, Salz und dergleichen sein. Das Förderband 101 kann bspw. als Dosierband, Bunkerband, Sortierband, Steigförderband, Siloabzugsband oder Verfahrband ausgestaltet sein. Das Förderband 101 ist mittels eines Motors, bspw. eines Elektromotors, angetrieben, sodass sich das Medium 102 mit der Geschwindigkeit v bewegt. Eine Außenkontur des Mediums 102, die dieses auf dem Förderband 101 einnimmt kann bspw. durch geeignete Former vorgegeben sein.

Oberhalb des Förderbandes 101 ist ein erstes Radarmessgerät 103, wie es aus der Füllstandmesstechnik bekannt ist, angeordnet. Die aus der Füllstandmesstechnik bekannten Radarmessgeräte 103 sind dazu ausgeführt ausschließlich einen Abstand a zu einem Objekt zu bestimmen und im Bereich der Volumenstrombestimmung von Schüttgütern auf Förderbändern 101 zunächst nur bedingt einsetzbar.

Um diese Volumenstrombestimmung mittels Radarsensor ausführen zu können muss das erste Radarmessgerät 103 über dem Förderband 101 vorzugsweise mit Messrichtung, d.h. in der Regel einer Hauptabstrahlrichtung H₁ senkrecht nach unten montiert werden und die Geschwindigkeit v des Förderbandes 101 bekannt sein. Mittels des ersten Radarmessgeräts 103 wird ein Abstand h zwischen dem ersten Radarmessgerät 103 und einer Oberfläche des Mediums 102, das auf dem Förderband 101 transportiert wird, bestimmt. Ist der Abstand a zwischen dem ersten Radarmessgerät 103 und dem Förderband 101 bekannt, so kann mit dem gemessenen Abstand a eine Höhe h des Mediums 102 auf dem Förderband 101 bestimmt werden.

Die Geschwindigkeit v, mit der sich das Förderband 101 bewegt, kann entweder vorgegeben sein, oder, wie es in Figur 1 gezeigt ist, von einem Drehzahlmessgerät 201, bspw. einem Dynamo oder einem anderen Messgerät, bestimmt werden.

Möglich ist ebenfalls, gemäß der Ausgestaltungsform in Figur 2, ein weiteres Radarmessgerät 104 einzusetzen, das als Dopplerradar ausgeführt ist, mit dem ausschließlich Geschwindigkeiten gemessen werden können. Das weiter Radarmessgerät 104 weist eine zweite Hauptabstrahlrichtung H₂ auf, die schräg, z.B. 30°-60° zur Bezugsebene des Förderbandes 101 und in Transportrichtung T ausgerichtet ist, sodass die Geschwindigkeit v des Förderbandes 101 bestimmt werden kann.

Schräg im Sinne der vorliegenden Anmeldung meint, dass die zweite Hauptabstrahlrichtung H₂ und die Transportrichtung T des Förderbandes 101 in einer Seitenansicht, weder senkrecht aufeinander stehen, noch parallel zueinander ausgerichtet sind, d. h. die zweite Hauptabstrahlrichtung H₂ insbesondere zwischen 30° und 60° von einer Oberflächennormalen O auf die Oberfläche des Förderbandes und in einer Draufsicht zwischen 0° und 60° von der Transportrichtung T des Förderbandes 101 abweicht.

In einer gemeinsamen Auswerteeinheit können die Höhe h des Mediums 102, die mit dem ersten Radarmessgerät 103 bestimmt wird, und die Geschwindigkeit v des Mediums 102 auf dem Förderband 101 kombiniert, ausgewertet und so in Kenntnis eines Querschnitts des Mediums auf dem Förderband 101 oder aufgrund empirischer Daten die bspw. in einem Speicher hinterlegt sein können, der Volumenstrom V bestimmt werden.

Nachteilig an diesen Verfahren ist, dass immer zwei unabhängige Messprinzipen angewendet werden müssen, und dafür unterschiedliche Sensoren verbaut werden müssen. Die dadurch erhöhten Anschaffungskosten und der erhöhte Wartungsaufwand werden als nachteilig empfunden. Bei der Messung mit dem Dopplerradar wird ferner nicht nur die Geschwindigkeit des Mediums auf dem Förderband gemessen, sondern es werden auch andere Geschwindigkeitskomponenten bspw. von Staub und anderen Störreflektoren im Abstrahlkegel des Dopplerradars miterfasst. Ferner sind Drehzahlmessgeräte häufig unzureichend genau und/oder Wartungsintensiv und kommen oft mit den rauen Umgebungsbedingungen eines Industriebetriebes nicht zurecht.

Weiterer Stand der Technik ist aus EP 2 803 951 A1 und EP 2 837 950 A1 bekannt.

Es ist die Aufgabe der vorliegenden Erfindung, ein Verfahren zur Messung eines Volumenstroms V eines durch ein Förderband transportierten Mediums mit einem Radarmessgerät anzugeben, das die aus dem Stand der Technik bekannten Nachteile nicht aufweist, insbesondere eine geringere Störanfälligkeit aufweist und den Einsatz kostengünstigerer Messgeräte ermöglicht.

Diese Aufgabe wird durch ein Verfahren zur Messung eines Volumenstroms V eines durch ein Förderband transportierten Mediums mit einem Radarmessgerät gemäß Patentanspruch 1 gelöst. Vorteilhafte Weiterbildungen des Verfahrens sind Gegenstand abhängiger Patentansprüche.

Ein erfindungsgemäßes Verfahren zur Messung eines Volumenstroms V eines durch ein Förderband transportierten Mediums mit einem Radarmessgerät, bei dem das Radarmessgerät so angeordnet und ausgerichtet ist, dass eine erste Hauptabstrahlrichtung H₁ des Radarmessgeräts mit einer Richtung einer Oberflächennormalen O des Förderbands einen ersten Winkel einschließt, wobei der erste Winkel größer als 0° und kleiner als 90° ist, und mit einer Förderrichtung des Förderbands einen zweiten Winkel einschließt, wobei der zweite Winkel zwischen 0° und 80°, vorzugsweise zwischen 0° und 60°, beträgt, einschließt, umfassend folgende Schritte:
- Aussenden eines Sendesignals mit einer Mehrzahl von Frequenzrampen,
- Empfangen eines Empfangssignals pro Frequenzrampe des Sendesignals,
- Abspeichern der Empfangssignale,
- Durchführen einer ersten Spektralanalyse eines jeden einzelnen Empfangssignals,
- Durchführen einer zweiten Spektralanalyse über mehrerer Empfangssignale oder Ausgangssignale der ersten Spektralanalyse an wenigstens einem Ort der Signale
- Bestimmen einer Höhe des Mediums auf dem Förderband auf Basis der Ausgangssignale der ersten Spektralanalyse,
- Bestimmen einer Geschwindigkeit auf Basis der Ausgangssignale der zweiten Spektralanalyse und
- Bestimmen eines Volumenstroms V des Mediums auf Basis der Höhe und der Geschwindigkeit.

Erfindungsgemäß wird damit also ein sogenanntes Chirp-Signal, d.h. ein frequenzmoduliertes Signal mit einer Mehrzahl von kurzen Frequenzrampen als Sendesignal verwendet. Eine Mehrzahl von Frequenzrampen soll vorliegend eine Anzahl von mehr als 5, vorzugsweise wenigstens 25, weiter bevorzugt wenigstens 50 und idealerweise einigen Hundert Frequenzrampen, bspw. 100, 200, 300, 400, 500 oder 600 Frequenzrampen bedeuten. Auch größere Vielfache von 100 und alle Zwischenwerte sind möglich. Besonders vorteilhaft sind Anzahlen, die eine Potenz von zwei sind, insbesondere 64, 128, 256, 512 und 1024.

Die Anzahl der Frequenzrampen, die in einem Sendesignal enthalten sind, gibt die Anzahl der möglichen Empfangssignale vor. Diese Anzahl bestimmt eine maximal mögliche zeitliche Auflösung für das Ausgangssignal der zweiten Spektralanalyse, sodass damit auch eine maximale zeitliche Auflösung für die Bestimmung der Geschwindigkeit einhergeht.

Kurze Frequenzrampen im Sinne der vorliegenden Anmeldung sind Frequenzrampen, bei denen das Sendesignal bspw. in einer Rampendauer von wenigen Mikrosekunden bis zu einigen hundert Mikrosekunden, bspw. 100 µs oder 200 µs, einen Frequenzbereich von einigen GHz, bspw. 5 GHz oder 10 GHz, vorzugsweise in einem Frequenzbereich zwischen 75 GHz und 85 GHz, durchläuft. Die Frequenzrampen können dabei kontinuierlich oder diskret durchgesweept werden, d.h. dass eine kontinuierliche Veränderung der Frequenz erfolgt, oder die Veränderung erfolgt in einer feinen Rasterung, bspw. in 5 Hz-Schritten. Solche kurzen Frequenzrampen werden auch als Chirps bezeichnet.

Durchführen einer zweiten Spektralanalyse über mehrerer Empfangssignale oder Ausgangssignale der ersten Spektralanalyse an wenigstens einem Ort der Signale bedeutet, dass die zweite Spektralanalyse über die mehreren Signale hinweg bei den Empfangssignalen zu einer Zeit, oder bei den Ausgangssignalen der ersten Spektralanalyse zu einer bestimmten Frequenz erfolgt. Werden die Signale abgetastet, so kann die Spektralanalyse bei einem entsprechenden Abtastwert erfolgen.

Die Empfangssignale werden Empfangen und bspw. in einem Zwischenspeicher abgespeichert, wobei pro Frequenzrampe ein Empfangssignal erhalten wird.

Die abgetasteten Empfangssignale können dazu bspw. in Matrixform abgespeichert werden, wobei in jede Zeile der Matrix ein Empfangssignal geschrieben wird. So können dann die erste Spektralanalyse zeilenweise und die zweite Spektralanalyse spaltenweise durchgeführt werden.

Die Empfangssignale werden mit der ersten Spektralanalyse vom Zeit- in den Frequenzbereich überführt, wobei eine Frequenzverschiebung der Empfangssignale relativ zum Sendesignal bzw. den einzelnen Frequenzrampen proportional zu einem Abstand einer Reflexion zum Sender, d. h. zu dem Füllstandmessgerät, ist, sodass grundsätzlich Reflexionen und deren Abstände zum Füllstandmessgerät, vorliegend also bspw. die Entfernung der Oberfläche des Mediums auf dem Förderband zu dem Füllstandmessgerät, aus dem erhaltenen Signal ermittelt werden können. Unter Einbeziehung des ersten Winkels und des zweiten Winkels ist damit grundsätzlich auch eine Höhe des Mediums auf dem Förderband bestimmbar.

Durch die zweite Spektralanalyse, die über die Ausgangssignale der ersten Spektralanalyse oder die Empfangssignale hinweg durchgeführt wird, wird eine von der Geschwindigkeit der Reflexion, d. h. einer Geschwindigkeit, mit der sich der Punkt des Mediums, an dem die Reflexion verursacht wurde, bewegt, abhängige Phase des Signals ermittelt. Aus der Änderung der Phase über die einzelnen Empfangssignale hinweg kann eine Geschwindigkeitsverteilung am Ort der Reflexion und damit vorliegend der Oberfläche des Mediums und damit des Förderbands ermittelt werden.

Die zweite Spektralanalyse kann auf einen Abstand beschränkt werden, in dem die Oberfläche des Mediums auf dem Förderband liegt, d. h. es werden für die Bestimmung der Geschwindigkeit nur Signalanteile verwendet, die tatsächlich eine Geschwindigkeit des Mediums repräsentieren.

Der erste Winkel α wird in der vorliegenden Anmeldung in Bezug die Oberflächennormale O, der zweite Winkel in einer Draufsicht von oben, d. h. mit Blick in Richtung der Oberflächennormalen O in Bezug zur Transportrichtung T gemessen. Die Richtung der Oberflächennormale O soll bei Förderbändern mit einer Muldung am tiefsten Punkt der Muldung quer zur Transportrichtung T, senkrecht auf eine Ebene stehen, die durch eine Tangente an das Förderband in diesem Punkt und die Transportrichtung T aufgespannt wird.

Aus dem so ermittelten Abstand und der so ermittelten Geschwindigkeit kann unter Kenntnis eines Querschnitts des auf dem Förderband befindlichen Mediums der Volumenstrom V und unter Einbeziehung weiterer Faktoren wie bspw. der Dichte ein Massenstrom des Mediums ermittelt werden. Es sei an dieser Stelle angemerkt, dass die erste Spektralanalyse und die zweite Spektralanalyse in umgekehrter Reihenfolge durchgeführt werden können. Die Begriffe "erste" und "zweite" dienen lediglich der Unterscheidung und geben keine Reihenfolge an.

In einer Ausgestaltung des Verfahrens kann der erste Winkel zwischen 10° und 80°, vorzugsweise zwischen 30° und 60°, weiter bevorzugt 45° betragen. Durch einen Winkel der wenigstens 10° von der Richtung der Oberflächennormalen O abweicht wird sichergestellt, dass für eine Messung ausreichend Signalanteile in Transportrichtung T und senkrecht zum Medium vorhanden sind. Durch einen Winkel zwischen 30° und 60° wird dieses Verhältnis nochmals verbessert. Bei einem Winkel von 45° sind die Signalanteile gleich groß.

Um einen aktuellen Volumenstrom V auf dem Förderband bestimmen zu können, ist es vorteilhaft, wenn der Schritt des Bestimmens des Volumenstroms V einen Querschnitt des Mediums auf dem Förderband berücksichtigt. Gemeint ist dabei insbesondere, dass ein aktueller Querschnitt, d.h. der zum Zeitpunkt der Messung vorliegender Querschnitt berücksichtigt wird. Auf diese Weise kann der Volumenstrom V abhängig davon, ob gerade viel oder wenig Medium gefördert wird, bestimmt werden.

In einer einfachen Variante kann der Querschnitt vorgegeben sein. Das bedeutet, dass der Querschnitt bspw. abhängig von einer aktuellen Speisung bekannt ist, oder in einer vorhergehenden Messung bestimmt wird und dadurch bekannt ist.

Alternativ kann der Querschnitt aufgrund eines Höhenprofils des Mediums auf dem Förderband ermittelt werden. Bspw. kann das Höhenprofil mittels einer Phased Array Antenne deren Hauptabstrahlrichtung durch eine geeignete Ansteuerung veränderlich ist, abgetastet werden. Ist die Form des Förderbands, d.h. insbesondere ein Verlauf des Querschnitts des Förderbands bekannt, kann so der Querschnitt des Mediums auf dem Förderband bestimmt werden.

Um kurzfristige Überhöhungen des bestimmten Querschnitts des Mediums aufgrund von lokalen Anhäufungen auf dem Förderband zu vermeiden, kann es sinnvoll sein, zur Bestimmung des Volumenstroms V einen Mittelwert zu verwenden. Durch die Verwendung bspw. eines gleitenden Mittelwerts, bspw. der vergangenen 2-50 Messwerte können die ermittelten Querschnittswerte geglättet werden, sodass Spitzenwerte abgemildert werden und gleichzeitig langfristige Messwertentwicklungen berücksichtigt werden.

Zusätzlich kann die durch das vorliegende Verfahren ermittelte Geschwindigkeit des Förderbandes ausgegeben werden. Diese kann bspw. zu Informationszwecken angezeigt und/oder für nachgeordnete oder übergeordnete Einheiten als Messwert, bspw. für eine Geschwindigkeitsregelung des Förderbandes zur Verfügung gestellt werden.

Die erste und/oder die zweite Spektralanalyse können beispielsweise Fouriertransformationen sein. Insbesondere die schnelle Fourier-Transformation (FFT) bietet sich als effizienter und in der Signalverarbeitung weit verbreiteter Algorithmus zur Überführung von Signalen zwischen dem Zeit- und dem Frequenzbereich an und ermöglicht die Einsparung von Rechenleistung und Rechenzeit.

Zur Implementierung insbesondere der zweiten Spektralanalyse mit einer schnellen Fouriertransformation weist das Sendesignal vorzugsweise eine Anzahl von 2ⁿ Frequenzrampen auf. Da die Anzahl der Empfangssignale von der Anzahl der Frequenzrampen bestimmt wird und es eine Voraussetzung zur Durchführung der schnellen Fouriertransformation (FFT) ist, dass 2ⁿ Abtaststellen, d.h. vorliegende Empfangssignale vorliegen, ist dies vorteilhaft. Das Sendesignal kann dafür bspw. 128, 256 oder 512 Frequenzrampen enthalten.

Um Messfehler auszuschließen kann eine Startfrequenz und/oder eine Steigung und/oder eine Schrittweite und/oder eine Endfrequenz der Frequenzrampen variiert werden.

Durch eine Variation der Parameter des Verfahrens, bspw. der Anzahl an Frequenzrampen, der Startfrequenz, der Zielfrequenz, der Sweepzeit oder der Pausenzeit zwischen den Frequenzrampen im einem Sendesignal können Störeinflüsse, bspw. durch andere Sender minimiert, und eine Auswertung dynamisch verändert und optimiert werden. Beispielsweise können entsprechende Veränderungen abhängig von den bislang beobachteten Geschwindigkeiten der Reflexionen erfolgen, sodass bspw. durch eine Anpassung der Anzahl der Frequenzrampen die Auflösung hinsichtlich der Geschwindigkeitsauswertung erhöht oder erniedrigt werden kann.

Insbesondere der erste Winkel kann durch einen Lagesensor bestimmt werden. Auf diese Weise wird eine Ausrichtung des Messgeräts relativ zur Senkrechten automatisiert ermittelt und es ist lediglich ein Abgleich mit einer Ausrichtung des Förderbandes, das nicht zwangsläufig horizontal verläuft, sondern auch zur Überwindung von Höhenunterschieden eine Steigung aufweisen kann, notwendig.

In eine Ausgestaltungsform kann es sich bei dem verwendeten Radarmessgerät um ein sog. Zweileiterfeldgerät handeln, das über eine Zweidrahtleitung mit Energie versorgt wird und über die selbe Zweidrahtleitung Messwerte nach dem 4-20 mA Standard an eine übergeordnete Einheit übertragen kann.

Die vorliegende Erfindung wird nachfolgend anhand von Ausführungsbeispielen unter Bezugnahme auf die beigefügten Figuren eingehend erläutert. Es zeigen:
- Figur 1: eine erste Messanordnung zur Bestimmung eines Volumenstroms eines durch ein Förderband transportierten Mediums (schon behandelt),
- Figur 2: eine zweite Messanordnung zur Bestimmung eines Volumenstroms eines durch ein Förderband transportierten Mediums (schon behandelt),
- Figur 3: eine Seitenansicht einer Messanordnung zur Durchführung des Verfahrens zur Bestimmung eines Volumenstroms eines durch ein Förderband transportierten Mediums gemäß der vorliegenden Anmeldung,
- Figur 4: eine Draufsicht von oben auf die Messanordnung gemäß Figur 3,
- Figur 5: eine Draufsicht auf einen Querschnitt der Messordnung gemäß Figur 3 in Blickrichtung der Transportrichtung T,
- Figur 6: das Sendesignal des Verfahrens zur Bestimmung des Volumenstroms eines durch ein Förderband transportierten Mediums gemäß der vorliegenden Anmeldung und
- Figur 7: den Ablauf des Verfahrens der vorliegenden Anmeldung in einem Ablaufdiagramm.

In den Figuren bezeichnen - soweit nicht anders angegeben - gleiche Bezugszeichen gleiche Komponenten mit gleicher Funktion.

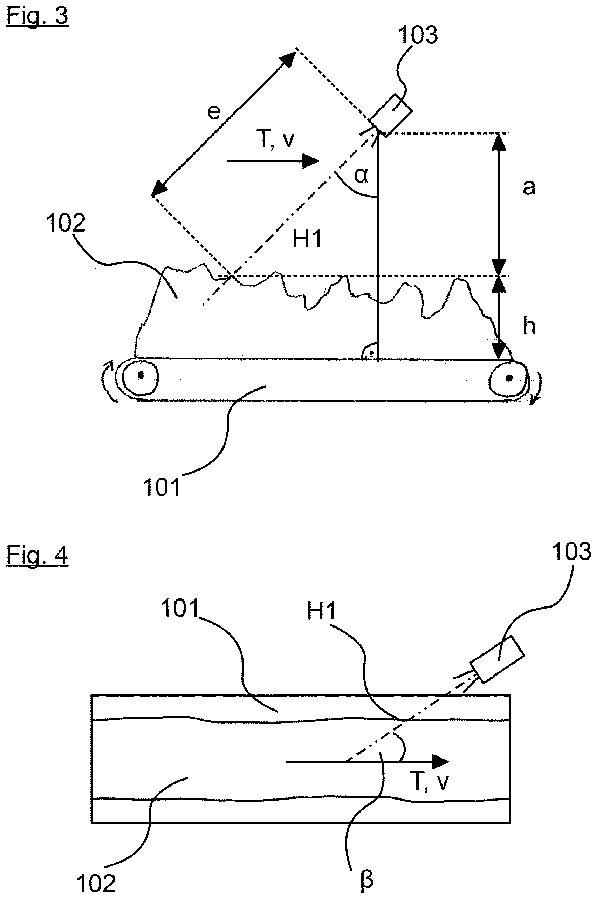

Figur 3 zeigt eine Seitenansicht einer Messanordnung zur Durchführung des Verfahrens zur Bestimmung eines Volumenstroms V eines durch ein Förderband 101 transportierten Mediums 102 gemäß der vorliegenden Anmeldung. Gemäß dem in Figur 3 gezeigten Ausführungsbeispiel ist ein erstes Radarmessgerät 103 oberhalb des Förderbandes 101, mittels dessen das Medium 102 mit einer Geschwindigkeit v in einer Transportrichtung T transportiert wird, angeordnet. Das Radarmessgerät 103 weist eine Hauptabstrahlrichtung H₁ auf, die im vorliegenden Ausführungsbeispiel mit einer Oberflächennormalen O des Förderbands 101 einen ersten Winkel α von 45° einschließt.

Bei gemuldeten Förderbändern 101, d.h. Förderbändern, die eine quer zur Transportrichtung T verlaufende Mulde aufweisen, wird die Richtung der Oberflächennormalen O durch eine Oberflächennormale O auf eine Ebene definiert, die durch eine senkrecht zur Transportrichtung T verlaufende Tangente am tiefsten Punkt der Mulde an das Förderband 101 und die Transportrichtung T aufgespannt wird.

Ein von dem Radarmessgerät 103 ausgesendetes Sendesignal 105 ist gemäß der vorliegenden Anmeldung ein sog. Chirp-Signal. Ein Chirp-Signal weist pro Sendesignal 105 eine Mehrzahl von vorliegend 512 Frequenzrampen auf. Bei solchen Frequenzrampen, die auch als Chirps bezeichnet werden, durchläuft das Sendesignal im vorliegenden Ausführungsbeispiel in einer Rampendauer von 100 µs, eine Bandbreite von 10 GHz, in einem Frequenzbereich zwischen 75 GHz und 85 GHz. Die Frequenzrampen werde dabei kontinuierlich durchgesweept, d. h. es erfolgt eine kontinuierliche Veränderung der Frequenz.

Die einzelnen Chirps des Sendesignals 105 werden an der Oberfläche des Mediums 102 reflektiert und als eine Vilezahl von Empfangssignalen zu dem Radarmessgerät 103 zurückgeworfen, dort empfangen, abgespeichert und gemäß dem unten näher erläuterten Verfahren analysiert.

Aus der Analyse der Empfangssignale kann zunächst eine Entfernung e der Oberfläche des Mediums 102 zu dem Radarmessgerät 103 ermittelt werden. In Kenntnis der örtlichen Gegebenheiten wie der Anordnung des Radarmessgeräts 103 relativ zu dem Förderband 101, insbesondere des ersten Winkels α und eines zweiten Winkels β, der aus Figur 2 ersichtlich ist, kann aus der Entfernung e eine Höhe h des Mediums 102 auf dem Förderband 101 sowie die Geschwindigkeit v des Förderbandes 101 ermittelt werden. Aus diesen Größen kann wiederum in Kenntnis eines Querschnitts des Mediums 102 oder empirisch ermittelten Werten, darüber, welches Volumen bei einer bestimmten Höhe h und einer ermittelten Geschwindigkeit v transportiert wird, ein Volumenstrom V des Mediums 102 ermittelt werden.

Figur 4 zeigt eine Draufsicht von oben auf die Messanordnung gemäß Figur 3. In dieser Darstellung ist deutlich zu erkennen, dass die Hauptabstrahlrichtung H₁ des Radarmessgeräts 103 mit der Transportrichtung T des Förderbands 101 den zweiten Winkel β von vorliegend 30° einschließt. Durch diesen zweiten Winkel β kann erreicht werden, dass das Radarmessgerät 103 in Draufsicht von oben neben dem Förderband 101 angeordnet werden kann, sodass Partikel des Mediums keine unmittelbare Verschmutzung des Radarmessgeräts 103 hervorrufen. Ferner ist das Radarmessgerät 103 an dieser Stelle besser für Wartungsarbeiten zugänglich und kann ggf. im laufenden Betrieb des Förderbandes 101 gewartet werden.

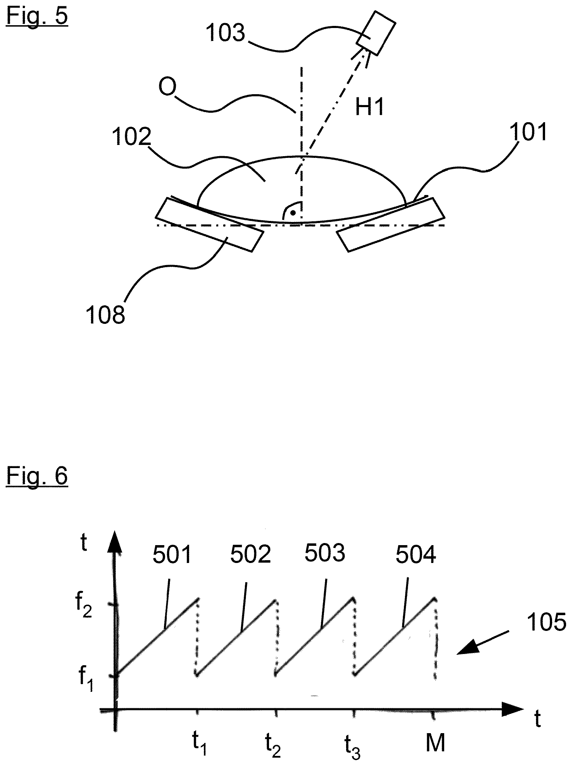

In Figur 5 ist eine Draufsicht auf einen Querschnitt der Messordnung gemäß Figur 3 in Blickrichtung der Transportrichtung T gezeigt. In dieser Ansicht ist deutlich zu erkennen, dass das Förderband 101 gemuldet ausgeführt ist, d.h. dass die seitlichen Ränder des Förderbandes 101 durch Transportrollen 108 gegenüber einem Mittelteil angehoben sind. Durch eine solche Muldung kann erreicht werden, dass ein Schüttgut auf dem Förderband 101 nicht seitlich herabrieselt oder sich unkontrolliert in Querrichtung auf dem Förderband 101 verteilt.

In Figur 5 ist ferner die gemäß der vorliegenden Anmeldung für dieses Förderband 101 zu bestimmende Oberflächennormale O eingezeichnet, die senkrecht auf eine Ebne steht, die durch eine Tangente in Querrichtung an den tiefsten Punkt der Mulde des Förderbandes 101 und die Transportrichtung T aufgespannt wird.

Figur 6 zeigt das Sendesignal 105 des Verfahrens zur Volumenstrombestimmung gemäß der vorliegenden Anmeldung.

Das Sendesignal 105 wird in diesem Ausführungsbeispiel während eines Messzyklus M in einem Zeitraum zwischen t = 0 und t = M in mehrere Frequenzrampen 501, 502, 503, 504 unterteilt, innerhalb welcher eine Frequenz f des abgestrahlten Radarsignals jeweils linear von einer Startfrequenz f₁ hin zu einer Stoppfrequenz f₂ moduliert wird. Diese einzelnen Frequenzrampen 501-504 werden auch als Chirps bezeichnet. Im Unterschied zu den bisher verwendeten Modulationsformen aus dem Stand der Technik wird während eines Messzyklus M zwischen t = 0 und t = M eine vorab definiert Anzahl an einzelnen Frequenzrampen 501-504 mit definiertem Zeitverhalten und definiertem Frequenzverhalten in Richtung des Mediums 102 abgestrahlt und wieder empfangen.

Als definiertes Zeitverhalten wird vorliegend ein vorbekanntes und exakt umgesetztes Timing der Start- und Stoppzeiten für jede Frequenzrampe 501-504 und der Pausen zwischen den Frequenzrampen 501-504 verstanden. Ein definiertes Frequenzverhalten meint die exakte Einhaltung von Startfrequenz f₁ und Stopp-frequenz f2 sowie der Steigung der jeweiligen Frequenzrampen.

In Figur 6 sind der besseren Übersichtlichkeit halber lediglich vier Frequenzrampen 501-504 dargestellt. In einer tatsächlichen Umsetzung des vorliegenden Verfahrens werden wenigstens mehrere Zehn, bevorzugt mehrere Hundert, solcher Frequenzrampen 501-504 ausgesendet. Die Anzahl der Frequenzrampen 501-504 ist häufig eine Zweierpotenz, insbesondere 128, 256, 512 oder 1024. Abhängig von der jeweiligen Anwendung können auch höhere oder geringere Potenzen verwendet werden.

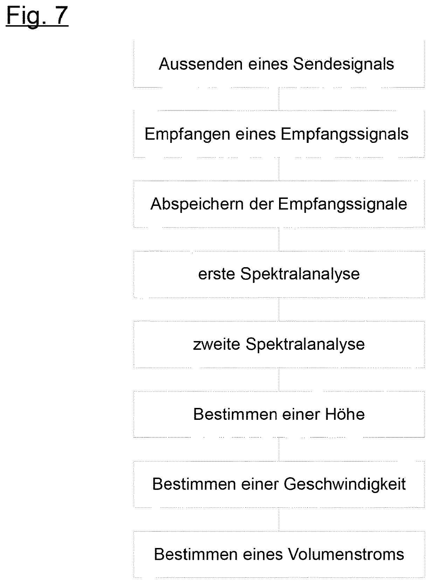

In Figur 7 ist ein Ablauf des Verfahrens der vorliegenden Anmeldung in einem Ablaufdiagramm dargestellt.

In einem ersten Schritt wird ein Sendesignals 105 mit einer Mehrzahl von Frequenzrampen 501-504 ausgesendet. Das Sendesignal 105 wird an der Oberfläche des Mediums 102, das auf dem Förderband 101 transportiert wird, reflektiert und es wird pro Frequenzrampe 501-504 in dem Sendesignal 105 ein Empfangssignal zu dem Radarmessgerät 103 zurückgeworfen.

Die Empfangssignale werden von dem Radarmessgerät 103 empfangen und in Matrixform abgespeichert. Das bedeutet, dass in der Matrix pro Zeile ein Empfangssignal abgespeichert wird. Die Spalten der Matrix ergeben sich durch die Abtastung der Empfangssignale, sodass jeweils in der n-ten Spalte der Matrix der n-te Abtastwert des jeweiligen Empfangssignals steht.

Die Empfangssignale werden anschließend einer ersten Spektralanalyse, vorliegend einer schnellen Fouriertransformation (FFT) unterzogen. Aus den daraus erhaltenen Signalen kann ein Entfernung e eines Reflektors, an dem das Sendesignal reflektiert wurde, d.h. vorliegend der Oberfläche des Mediums 102, zu dem Radarmessgerät 103 ermittelt werden. Abhängig von der Ausrichtung der Hauptabstrahlrichtung H₁ des Radarmessgeräts 103 relativ zu dem Förderband 101, d.h. abhängig von dem ersten Winkel α und dem zweiten Winkel β kann aus der Entfernung e der Abstand a in Richtung der Oberflächennormalen O zwischen der Oberfläche des Mediums 102 und dem Radarmessgerät 103 und damit in Kenntnis eines Abstandes des Förderbands 101 von dem Radarmessgerät 103 die Höhe h des Mediums 102 auf dem Förderband 101 bestimmt werden.

Anschließend wird eine zweite Spektralanalyse, vorliegend eine zweite schnelle Fouriertransformation (FFT) über mehrere, vorzugsweise alle Ausgangssignale der ersten Spektralanalyse durchgeführt. Die zweite Spektralanalyse kann auf eine Stelle der Hauptreflexion aus der ersten Spektralanalyse, d.h. dort, wo die Oberfläche des Mediums 102 detektiert wurde, beschränkt werden. Die zweite Spektralanalyse erfolgt damit in der eingeschränkten Form in Spaltenrichtung über die einzelnen Ausgangssignale hinweg bei den Abtastwerten, die der Hauptreflexion entsprechen, bei denen also bei der ersten Spektralanalyse die größte Amplitude ermittelt wurde.

Aus den Ergebnissen der zweiten Spektralanalyse wird eine Phase der Empfangssignale bestimmt. Hieraus wird eine Veränderung der Phase zwischen den Empfangssignalen ermittelt. Diese Veränderung der Phase ist proportional zu einer Geschwindigkeit der Reflektoren an der jeweiligen Stelle, sodass an der Stelle der Hauptreflexion die Geschwindigkeit v auf Basis der Veränderung der Phase bestimmt werden kann.

Aus der Höhe h des Mediums 102 auf dem Förderband 101 sowie der Geschwindigkeit v kann dann in Kenntnis des Querschnitts des Mediums 102 auf dem Förderband 101 der Volumenstrom V des Mediums 102 ermittelt und ausgegeben werden. Zusätzlich kann - sofern gewünscht - auch die Geschwindigkeit v bspw. zur Geschwindigkeitsregelung für das Förderband 101 ausgegeben werden.

### Bezugszeichenliste

- 101: Förderband
- 102: Medium
- 103: Radarmessgerät
- 104: weiteres Radarmessgerät
- 105: Sendesignal
- 108: Transportrollen
- 201: Drehzahlmessgerät
- 501: Frequenzrampe
- 502: Frequenzrampe
- 503: Frequenzrampe
- 504: Frequenzrampe

- v: Geschwindigkeit
- T: Transportrichtung
- H₁: erste Hauptabstrahlrichtung
- H₂: zweite Hauptabstrahlrichtung
- O: Oberflächennormale
- V: Volumenstrom
- M: Messzyklus
- f₁: Startfrequenz
- f₂: Stoppfrequenz
- f: Frequenz
- e: Entfernung
- a: Abstand
- h: Höhe

## Patentansprüche

1. Verfahren zur Messung eines Volumenstroms (V) eines durch ein Förderband (101) transportierten Mediums (102) mit einem Radarmessgerät (103),
wobei das Radarmessgerät (103) so angeordnet und ausgerichtet ist, dass eine Hauptabstrahlrichtung (H₁) des Radarmessgeräts (103) mit einer Richtung einer Oberflächennormalen (O) des Förderbands (101) einen ersten Winkel (α) einschließt, wobei der erste Winkel (α) größer als 0° und kleiner als 90° ist, und mit einer Transportrichtung (T) des Förderbands (101) einen zweiten Winkel (β) einschließt, wobei der zweite Winkel (β) zwischen 0° und 80°, vorzugsweise zwischen 0° und 60°, beträgt, einschließt, umfassend folgende Schritte:
- Aussenden eines Sendesignals (105) mit einer Mehrzahl von Frequenzrampen (501-504),
- Empfangen eines Empfangssignals pro Frequenzrampe (501-504) des Sendesignals (105),
- Abspeichern der Empfangssignale,
- Durchführen einer ersten Spektralanalyse eines jeden einzelnen Empfangssignals,
- Durchführen einer zweiten Spektralanalyse über mehrerer Empfangssignale oder Ausgangssignale der ersten Spektralanalyse an wenigstens einem Ort des Signals
- Bestimmen einer Höhe (h) des Mediums (102) auf dem Förderband auf Basis der Ausgangssignale der ersten Spektralanalyse,
das Verfahren **gekennzeichnet durch** folgende Schritte:
- Bestimmen einer Geschwindigkeit (v) auf Basis der Ausgangssignale der zweiten Spektralanalyse und
- Bestimmen eines Volumenstroms (V) des Mediums (102) auf Basis der Höhe (h) und der Geschwindigkeit (v).

2. Verfahren gemäß Patentanspruch 1,
**dadurch gekennzeichnet, dass**
der erste Winkel zwischen 10° und 80°, vorzugsweise zwischen 30° und 60°, weiter bevorzugt 45° beträgt.

3. Verfahren gemäß einem der vorhergehenden Ansprüche,
**dadurch gekennzeichnet, dass**
der der Schritt des Bestimmens des Volumenstroms (V) einen Querschnitt des Mediums (102) auf dem Förderband (101) berücksichtigt.

4. Verfahren gemäß Anspruch 3,
**dadurch gekennzeichnet, dass**
der Querschnitt vorgegeben ist.

5. Verfahren gemäß Anspruch 3,
**dadurch gekennzeichnet, dass**
der Querschnitt aufgrund eines Höhenprofils des Mediums (102) auf dem Förderband (101) ermittelt wird.

6. Verfahren gemäß einem der vorhergehenden Ansprüche,
**dadurch gekennzeichnet, dass**
die Geschwindigkeit (v) des Förderbandes (101) ausgegeben wird.

7. Verfahren gemäß einem der vorhergehenden Ansprüche,
**dadurch gekennzeichnet, dass**
die erste und/oder die zweite Spektralanalyse eine schnelle Fourier-Transformation ist.

8. Verfahren gemäß einem der vorhergehenden Ansprüche,
**dadurch gekennzeichnet, dass**
ein Sendesignal (105) mit wenigstens 25, vorzugsweise wenigstens 50, weiter vorzugsweise einigen Hundert Frequenzrampen (501-504) ausgesendet wird.

9. Verfahren gemäß einem der vorhergehenden Ansprüche,
**dadurch gekennzeichnet, dass**
das Sendesignal (105) eine Anzahl von 2ⁿ Frequenzrampen (501-504) aufweist.

10. Verfahren gemäß Anspruch 7,
**dadurch gekennzeichnet, dass**
das Sendesignal (105) eine Anzahl von 128, 256 oder 512 Frequenzrampen (501-504) enthält.

11. Verfahren gemäß einem der vorhergehenden Ansprüche,
**dadurch gekennzeichnet, dass**
eine Frequenzrampe (501-504) eine Dauer zwischen 1 µs und 1000 µs, vorzugsweise zwischen 50 µs und 300 µs, insbesondere 100 µs oder 200 µs aufweist.

12. Verfahren gemäß einem der vorhergehenden Ansprüche,
**dadurch gekennzeichnet, dass**
der erste Winkel (o) durch einen Lagesensor bestimmt wird.

## Claims

1. A method for measuring by means of a radar measuring device (103) a volume flow (V) of a medium (102) transported by a conveyor belt (101),
wherein the radar measuring device (103) is arranged and oriented such that a main emission direction (H₁) of the radar measuring device (103) includes with a direction of a surface normal (O) of the conveyor belt (101) a first angle (α), wherein the first angel (α) is greater than 0° and smaller than 90°, and includes with a transport direction (T) of the conveyor belt (101) a second angle (β), wherein the second angle (β) is between 0° and 80°, preferably between 0° and 60°, comprising the following steps
- emitting a transmission signal (105) with a plurality of frequency ramps (501-504),
- receiving one reception signal per frequency ramp (501-504) of the transmission signal (105),
- storing the reception signals,
- performing a first spectral analysis of each individual reception signal,
- performing a second spectral analysis of several reception signals or output signals of the first spectral analysis at at least one location of the signal,
- determining a height (h) of the medium (102) on the conveyor belt based on the output signals of the first spectral analysis,
the method being **characterized by** the following steps:
- determining a velocity (v) based on the output signals of the second spectral analysis, and
- determining a volume flow (V) of the medium (102) based on the height (h) and the velocity (v).

2. The method according to patent claim 1,
**characterized in that**
the first angle is between 10° and 80°, preferably between 30° and 60°, more preferably 45°.

3. The method according to any one of the preceding claims,
**characterized in that**
the step of determining the volume flow (V) takes into account a cross section of the medium (102) on the conveyor belt (101).

4. The method according to claim 3,
**characterized in that**
the cross section is predefined.

5. The method according to claim 3,
**characterized in that**
the cross section is determined based on a height profile of the medium (102) on the conveyor belt (101).

6. The method according to any one of the preceding claims,
**characterized in that**
the velocity (v) of the conveyor belt (101) is outputted.

7. The method according to any one of the preceding claims,
**characterized in that**
the first and/or second spectral analysis is a fast Fourier transform.

8. The method according to any one of the preceding claims,
**characterized in that**
a transmission signal (105) is emitted with at least 25, preferably at least 50, more preferably several hundred frequency ramps (501-504).

9. The method according to any one of the preceding claims,
**characterized in that**
the transmission signal (105) has a number of 2ⁿ frequency ramps (501-504).

10. The method according to claim 7,
**characterized in that**
the transmission signal (105) contains a number of 128, 256 or 512 frequency ramps (501-504).

11. The method according to any one of the preceding claims,
**characterized in that**
a frequency ramp (501-504) has a length of between 1 µs and 1000 µs, preferably between 50 µs and 300 µs, in particular between 100 µs or 200 µs.

12. The method according to any one of the preceding claims,
**characterized in that**
the first angle (α) is determined by a position sensor.

## Revendications

1. Procédé de mesure d'un débit volumique (V) d'un milieu (102) transporté par une bande transporteuse (101), à l'aide d'un dispositif de mesure radar (103),
dans lequel le dispositif de mesure radar (103) est agencé et aligné de telle sorte qu'une direction d'émission principale (H₁) du dispositif de mesure radar (103) définit un premier angle (o) avec une direction d'une normale de surface (O) de la bande transporteuse (101), dans lequel le premier angle (o) est supérieur à 0° et inférieur à 90°, et un deuxième angle (β) avec une direction de transport (T) de la bande transporteuse (101), dans lequel le deuxième angle est compris entre 0° et 80°, de préférence entre 0° et 60°, comprenant les étapes suivantes consistant à:
- émettre un signal d'émission (105) avec une pluralité de rampes de fréquence (501-504),
- recevoir un signal de réception par rampe de fréquence (501-504) du signal d'émission (105),
- stocker les signaux de réception,
- effectuer une première analyse spectrale de chaque signal de réception individuel,
- effectuer une deuxième analyse spectrale d'une pluralité de signaux de réception ou de signaux de sortie de la première analyse spectrale à au moins un endroit du signal,
- déterminer une hauteur (h) du milieu (102) sur la bande transporteuse sur la base des signaux de sortie de la première analyse spectrale, le procédé étant **caractérisé par** les étapes suivantes consistant à:
- déterminer une vitesse (v) sur la base des signaux de sortie de la deuxième analyse spectrale et
- déterminer un débit volumique (V) du milieu (102) sur la base de la hauteur (h) et de la vitesse (v).

2. Procédé selon la revendication 1, **caractérisé par le fait que** le premier angle est compris entre 10° et 80°, de préférence entre 30° et 60°, plus préférentiellement 45°.

3. Procédé selon l'une quelconque des revendications précédentes, **caractérisé par le fait que** l'étape de détermination du débit volumique (V) prend en compte une section transversale du milieu (102) sur la bande transporteuse (101).

4. Procédé selon la revendication 3, **caractérisé par le fait que** la section transversale est prédéterminée.

5. Procédé selon la revendication 3, **caractérisé par le fait que** la section transversale est déterminée en raison d'un profil de hauteur du milieu (102) sur la bande transporteuse (101).

6. Procédé selon l'une quelconque des revendications précédentes, **caractérisé par le fait que** la vitesse (v) de la bande transporteuse (101) est délivrée.

7. Procédé selon l'un quelconque des revendications précédentes, **caractérisé par le fait que** la première et/ou la deuxième analyse spectrale est une transformée de Fourier rapide.

8. Procédé selon l'une quelconque des revendications précédentes, **caractérisé par le fait qu'**on émet un signal d'émission (105) avec au moins 25, de préférence au moins 50, en outre de préférence quelques centaines de rampes de fréquence (501-504).

9. Procédé selon l'une quelconque des revendications précédentes, **caractérisé par le fait que** le signal d'émission (102) présente un nombre de 2n rampes de fréquence (501-504).

10. Procédé selon la revendication 7, **caractérisé par le fait que** le signal d'émission (102) contient un nombre de 128, de 256 ou de 512 rampes de fréquence (501-504).

11. Procédé selon l'une quelconque des revendications précédentes, **caractérisé par le fait qu'**une rampe de fréquence (501-504) présente une durée comprise entre 1 µs et 1000 µs, de préférence entre 50 µs et 300 µs, en particulier de 100 µs ou de 200 µs.

12. Procédé selon l'une quelconque des revendications précédentes, **caractérisé par le fait que** le premier angle (o) est déterminé par un capteur de position.
